# FASCICULE DE BREVET EUROPEEN

(11) **EP 3 254 380 B1**
(45) Date de publication et mention de la délivrance du brevet: **22.08.2018**
(21) Numéro de dépôt: 16707838.5
(22) Date de dépôt: 27.01.2016
(51) Int. Cl.: H04B 1/12, H01Q 3/26, H04B 7/08, H04B 7/185

(54) **PROCÉDÉ ET SYSTÈME DE SUPPRESSION D'UN SIGNAL PARASITE REÇU PAR UNE CHARGE UTILE D'UN SATELLITE**
VERFAHREN UND SYSTEM ZUR UNTERDRÜCKUNG EINES VON EINER SATELLITENNUTZLAST EMPFANGENEN PARASITENSIGNALS
METHOD AND SYSTEM FOR SUPPRESSING A PARASITE SIGNAL RECEIVED BY A SATELLITE PAYLOAD

(30) Priorité: 02.02.2015 FR 1550769
(43) Date de publication de la demande: 13.12.2017
(73) Titulaire: Airbus Defence and Space SAS, 31402 Toulouse Cedex 4 (FR)
(72) Inventeur: PEZET, Bernard, 31402 Toulouse Cedex 4 (FR); JACQUEY, Nicolas, 31402 Toulouse Cedex 4 (FR)
(74) Mandataire: Ipside
(86) Numéro de dépôt international: PCT/FR2016/050162
(87) Numéro de publication internationale: WO 2016/124835

(56) Documents cités:
- EP-A1- 2 403 067
- FR-A1- 2 697 116
- US-A1- 2013 101 073

## Description

### DOMAINE TECHNIQUE

La présente invention concerne un procédé et un système de suppression d'un signal parasite reçu avec un signal utile par un réseau d'antennes élémentaires d'une charge utile d'un satellite, notamment un satellite de télécommunications.

### ÉTAT DE LA TECHNIQUE

De manière conventionnelle, un satellite de télécommunications comporte une charge utile équipée de moyens adaptés à recevoir des signaux utiles émis par des émetteurs terrestres, pour les retransmettre à destination de récepteurs terrestres, éventuellement par l'intermédiaire d'autres satellites.

Il n'est pas rare qu'un satellite de télécommunications reçoive, outre des signaux utiles, un ou plusieurs signaux parasites qui perturbent la réception desdits signaux utiles. Par exemple, un signal parasite peut correspondre à un signal émis par un brouilleur intentionnel, ou encore à un signal émis par un interféreur non intentionnel appartenant par exemple à un système de télécommunications terrestres utilisant les mêmes bandes fréquentielles que le satellite de télécommunications ou à un signal émis par un émetteur terrestre mal pointé d'un système de télécommunications par satellite voisin.

Afin de supprimer un signal parasite reçu avec un ou plusieurs signaux utiles, il est connu d'équiper la charge utile du satellite de télécommunications d'un réseau d'antennes élémentaires de réception, et de mettre en oeuvre des techniques numériques de formation de faisceaux (voir par exemple la demande de brevet US 2013/101073).

De manière connue, de telles techniques numériques permettent, après avoir numérisé les signaux élémentaires issus des différentes antennes élémentaires, de calculer des faisceaux numériques correspondant à différents diagrammes de rayonnement du réseau d'antennes élémentaires. En effet, en combinant entre eux les signaux élémentaires numérisés, on obtient un signal, dit « faisceau numérique », qui correspond au signal reçu avec un diagramme de rayonnement correspondant à la combinaison des diagrammes de rayonnement respectifs des antennes élémentaires. En modifiant les coefficients de pondération (complexes) des signaux élémentaires numérisés, on modifie le diagramme de rayonnement du réseau d'antennes élémentaires.

Ainsi, il est connu de calculer, à partir des signaux élémentaires numérisés, un faisceau numérique spatialement sélectif présentant un gain multiplicatif sensiblement nul dans la direction d'arrivée du signal parasite sur ledit réseau d'antennes élémentaires. En d'autres termes, un tel faisceau numérique est « aveugle » dans ladite direction d'arrivée du signal parasite.

Toutefois, de telles techniques numériques peuvent s'avérer inopérantes lorsque le signal parasite est très puissant. En effet, dans un tel cas, la présence du signal parasite dans les signaux élémentaires peut conduire à une saturation de certains équipements analogiques (amplificateur faible bruit, mélangeur, etc.) des chaînes de réception de la charge utile, et/ou une saturation des convertisseurs analogique/numérique, qui entraîne une dégradation de la qualité des signaux élémentaires numérisés. Une telle dégradation de qualité ne peut pas être compensée par la formation des faisceaux numériques.

Afin de limiter les risques de saturation, la demande internationale WO 2011/161198 (voir également la demande de brevet FR 2697116) propose d'équiper la charge utile du satellite d'un réseau analogique de formation de faisceaux. Un tel réseau analogique de formation de faisceaux (connu sous le nom de « beamforming network » ou BFN dans la littérature anglo-saxonne) fonctionne selon le même principe général que les techniques numériques de formation de faisceaux, à savoir celui de combiner d'une manière contrôlée les signaux élémentaires issus des antennes élémentaires. La principale différence réside dans le fait que le réseau analogique de formation de faisceaux opère sur les signaux élémentaires analogiques. Un tel réseau analogique de formation de faisceau comporte, de manière connue, des équipements analogiques permettant de contrôler la façon de combiner entre eux les signaux élémentaires analogiques, tels que des atténuateurs variables et des déphaseurs variables.

Dans la demande internationale WO 2011/161198, le réseau analogique de formation de faisceaux forme plusieurs faisceaux, dits « faisceaux analogiques », correspondant à différents diagrammes de rayonnement du réseau d'antennes élémentaires. Chaque faisceau analogique formé présente un gain sensiblement nul dans la direction d'arrivée du signal parasite. Ensuite, les faisceaux analogiques sont combinés de sorte à former un faisceau numérique desservant une zone de couverture prédéfinie à la surface de la Terre.

Ainsi, le réseau analogique de formation de faisceaux est mis en oeuvre pour supprimer le signal parasite dans chaque faisceau analogique, évitant ainsi, par la même occasion, toute saturation des équipements analogiques. Des techniques numériques de formation de faisceaux sont ensuite mises en oeuvre pour obtenir, à partir des faisceaux analogiques dans lesquels le signal parasite a été supprimé, un faisceau numérique permettant de recevoir des signaux utiles émis depuis la zone de couverture. Du fait que le faisceau desservant la zone de couverture est formé numériquement, on comprend que les faisceaux analogiques peuvent être optimisés pour la suppression du signal parasite, sans avoir à couvrir individuellement toute ladite zone de couverture à la surface de la Terre.

Cependant, la solution décrite par la demande internationale WO 2011/161198 présente plusieurs limitations.

Tout d'abord, cette solution est sensible aux défauts de calibration des équipements analogiques, y compris les antennes élémentaires, de sorte que les faisceaux analogiques formés présentent en pratique des diagrammes de rayonnement respectifs différents de ceux théoriquement formés.

En outre, les performances des réseaux analogiques de formation de faisceaux, en termes de réjection de signaux parasites, sont généralement limitées du fait notamment que les atténuateurs variables et les déphaseurs variables présentent des précisions et des résolutions limitées. Ceci est particulièrement pénalisant pour la couverture des signaux utiles qui s'en trouve impactée, mais également dans le cas où plusieurs signaux parasites, de directions d'arrivée respectives différentes, doivent être supprimés par le réseau analogique de formation de faisceaux.

### EXPOSÉ DE L'INVENTION

La présente invention a pour objectif de remédier à tout ou partie des limitations des solutions de l'art antérieur, notamment celles exposées ci-avant, en proposant une solution qui permette à la fois de réduire ou d'éviter les problèmes de saturation des équipements analogiques, tout en assurant une suppression efficace d'un ou de plusieurs signaux parasites tout en limitant l'impact de cette suppression sur la couverture des signaux utiles.

A cet effet, et selon un premier aspect, l'invention concerne un procédé de suppression d'un signal parasite reçu avec un signal utile par un réseau d'antennes élémentaires d'une charge utile d'un satellite, ledit procédé de suppression comportant une étape de formation analogique de faisceaux, dits « faisceaux analogiques », au moyen d'un réseau analogique de formation de faisceaux et à partir de signaux élémentaires fournis par lesdites antennes élémentaires, et une étape de formation numérique d'un faisceau, dit « faisceau numérique ». En outre, l'étape de formation analogique comporte :
- la formation d'au moins un faisceau analogique, dit « faisceau utile », pour lequel le gain du réseau d'antennes élémentaires dans la direction d'arrivée du signal utile est supérieur au gain dans la direction d'arrivée du signal parasite,
- la formation d'au moins un faisceau analogique, dit « faisceau auxiliaire », dans lequel le gain du réseau d'antennes élémentaires dans la direction d'arrivée du signal parasite est supérieur au gain dans la direction d'arrivée du signal utile,
le faisceau numérique étant obtenu, au cours de l'étape de formation numérique, par combinaison de signaux numériques obtenus par numérisation au moins dudit faisceau auxiliaire et dudit faisceau utile, au moyen de coefficients de pondération déterminés de sorte à supprimer le signal parasite dans ledit faisceau numérique.

Ainsi, le procédé de suppression de signal parasite comporte des étapes successives de formations de faisceaux : une étape de formation analogique, au moyen d'un réseau analogique de formation de faisceaux, et une étape de formation numérique mettant en oeuvre des techniques numériques de formation de faisceaux.

Au cours de l'étape de formation analogique, on forme un faisceau utile qui vise à atténuer le signal parasite par rapport au signal utile. Un tel faisceau utile permet donc de réduire les risques de saturation, par une atténuation plus ou moins importante du signal parasite, tout en améliorant le rapport signal sur bruit plus interférence (« signal to noise plus interference ratio » ou SNIR dans la littérature anglo-saxonne) du signal utile. En d'autres termes, le faisceau utile favorise la réception du signal utile.

En outre, on forme également un faisceau auxiliaire qui vise à favoriser la réception du signal parasite, en atténuant le signal utile par rapport au signal parasite. Un tel faisceau auxiliaire permet donc, de manière analogue, de réduire les risques de saturation, par une atténuation plus ou moins importante du signal utile, tout en améliorant le SNIR dudit signal parasite (le signal utile étant dans ce cas considéré comme une interférence vis-à-vis du signal parasite). Etant donné que les risques de saturation sont principalement liés au signal parasite, le gain général du faisceau auxiliaire peut en outre être contrôlé pour limiter les risques de saturation sans avoir à se préoccuper de l'impact sur le signal utile, dont la réception est assurée par le faisceau utile.

Ainsi, l'étape de formation analogique vise principalement à limiter les risques de saturation d'une manière qui permet néanmoins d'assurer la réception à la fois du signal utile et dudit signal parasite dans respectivement le faisceau utile et le faisceau auxiliaire.

C'est au cours de l'étape de formation numérique qu'est réellement réalisée la suppression totale ou partielle du signal parasite, en mettant en oeuvre des techniques numériques de formation de faisceaux qui offrent de meilleures performances que les réseaux analogiques de formation de faisceaux. Toutefois, le réseau analogique de formation de faisceaux contribue à améliorer les performances des techniques numériques de formation de faisceaux. Tout d'abord, tel qu'indiqué précédemment, les faisceaux auxiliaire et utile sont formés de telle sorte que les risques de saturation sont réduits. En outre, les faisceaux auxiliaire et utile sont formés de telle sorte qu'ils améliorent les SNIRs respectifs du signal parasite et du signal utile, de sorte que les coefficients de pondération permettant de supprimer le signal parasite sont estimés avec une plus grande précision.

Dans des modes particuliers de mise en oeuvre, le procédé de suppression de signal parasite peut comporter en outre l'une ou plusieurs des caractéristiques suivantes, prises isolément ou selon toutes les combinaisons techniquement possibles.

Dans des modes particuliers de mise en oeuvre, le réseau analogique de formation de faisceaux est commandé, au cours de l'étape de formation analogique, de sorte à former des faisceaux analogiques fournissant des signaux de puissances respectives inférieures à une puissance maximale prédéfinie.

De telles dispositions permettent, par un choix adapté de la puissance maximale prédéfinie, d'éviter toute saturation des différents équipements analogiques des chaînes de réception de la charge utile du satellite.

Dans des modes particuliers de mise en oeuvre, lorsqu'au moins deux signaux parasites sont reçus par le réseau d'antennes élémentaires, l'étape de formation analogique comporte la formation d'au moins deux faisceaux auxiliaires dans lesquels les gains du réseau d'antennes élémentaires dans les directions d'arrivée respectives desdits au moins deux signaux parasites sont supérieurs au gain dans la direction d'arrivée du signal utile.

Dans des modes particuliers de mise en oeuvre, lorsqu'au moins deux signaux utiles sont reçus par le réseau d'antennes élémentaires, l'étape de formation analogique comporte la formation d'au moins deux faisceaux utiles dans lesquels les gains du réseau d'antennes élémentaires dans les directions d'arrivée respectives desdits au moins deux signaux utiles sont supérieurs au gain dans la direction d'arrivée du signal parasite.

Dans des modes particuliers de mise en oeuvre, lorsque les signaux utiles sont organisés en différents canaux multiplexés en fréquences, l'étape de formation numérique comporte des étapes de :
- démultiplexage des canaux à partir des signaux numériques obtenus par numérisation des faisceaux analogiques,
- détermination de coefficients de pondération pour chaque canal,
- formation, pour chaque canal, d'un faisceau numérique au moyen des coefficients de pondération déterminés pour ledit canal.

Dans des modes particuliers de mise en oeuvre, l'étape de démultiplexage comporte un calcul de spectre fréquentiel pour chaque faisceau analogique numérisé par transformée de Fourier.

Dans des modes particuliers de mise en oeuvre, l'étape de formation numérique comporte une étape de multiplexage des faisceaux numériques respectifs des différents canaux.

Dans des modes particuliers de mise en oeuvre, lorsque les faisceaux numériques sont calculés dans le domaine fréquentiel, l'étape de multiplexage comporte la combinaison dans le domaine fréquentiel des spectres fréquentiels respectifs des faisceaux numériques, et le calcul d'une représentation temporelle du résultat de la combinaison par transformée de Fourier inverse.

Selon un second aspect, la présente invention concerne un produit programme d'ordinateur comportant un ensemble d'instructions de code de programme qui, lorsqu'elles sont exécutées par un processeur, configurent ledit processeur pour mettre en oeuvre un procédé de suppression de signal parasite selon l'un quelconque des modes de mise en oeuvre de l'invention.

Selon un troisième aspect, la présente invention concerne une charge utile de satellite comportant un réseau d'antennes élémentaires et un réseau analogique de formation de faisceaux, ainsi que des moyens configurés pour mettre en oeuvre un procédé de suppression de signal parasite selon l'un quelconque des modes de mise en oeuvre de l'invention.

Selon un quatrième aspect, la présente invention concerne un système satellitaire comportant un satellite et au moins une station sol, ledit satellite comportant une charge utile comportant un réseau d'antennes élémentaires et un réseau analogique de formation de faisceaux. En outre, le système satellitaire comporte des moyens configurés pour mettre en oeuvre un procédé de suppression de signal parasite selon l'un quelconque des modes de mise en oeuvre de l'invention.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un système de télécommunications par satellite,
- Figure 2 : une représentation schématique d'un mode préféré de réalisation d'une charge utile d'un satellite,
- Figure 3 : un diagramme représentant les principales étapes d'un procédé de suppression de signal parasite,
- Figure 4 : un diagramme représentant un mode préféré de mise en oeuvre d'une étape de formation numérique de faisceau du procédé de suppression de signal parasite.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

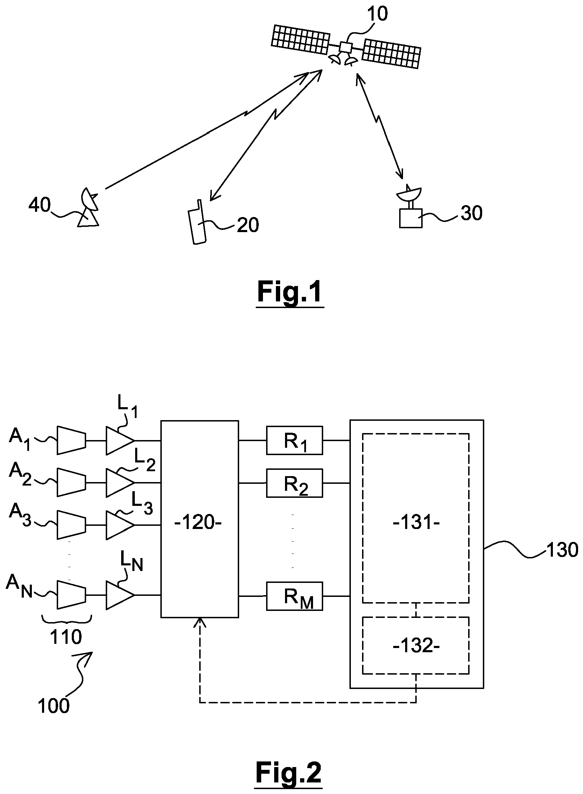

La figure 1 représente schématiquement un système satellitaire comportant un satellite 10 en orbite terrestre (GEO, LEO, MEO, etc.).

Tel qu'illustré par la figure 1, le satellite 10 reçoit un signal utile émis par un terminal terrestre 20, et le retransmet à destination d'une station sol 30 ou d'un autre terminal terrestre. De manière analogue, le satellite 10 peut recevoir un signal utile de la station sol 30, et le retransmettre à destination d'un terminal terrestre 20.

Dans l'exemple illustré, le satellite 10 reçoit également un signal parasite émis par un émetteur parasite 40, par exemple un brouilleur intentionnel ou un interféreur non intentionnel.

Tel qu'indiqué précédemment, le signal parasite perturbe la réception du signal utile, et la présente invention concerne la suppression du signal parasite dans les signaux reçus par le satellite 10.

La figure 2 représente schématiquement un mode préféré de réalisation d'une charge utile 100 du satellite 10. Tel qu'illustré par la figure 2, la charge utile comporte un réseau 110 d'antennes élémentaires. Dans l'exemple illustré par la figure 2, le réseau 110 comporte N antennes élémentaires A₁-A_{N} qui fournissent en sortie N signaux élémentaires.

La charge utile 100 comporte également un réseau 120 analogique de formation de faisceaux (connu sous le nom de « beamforming network » ou BFN dans la littérature anglo-saxonne) adapté à former des faisceaux, dits « faisceaux analogiques » à partir des signaux élémentaires issus respectivement des antennes élémentaires A₁-A_{N}.

Dans l'exemple illustré par la figure 2, le réseau 120 analogique de formation de faisceaux comporte N entrées, reliées respectivement aux antennes élémentaires A₁-A_{N}, et M sorties. En d'autres termes, le réseau 120 analogique de formation de faisceaux est adapté à former M faisceaux analogiques à partir des N signaux élémentaires.

Dans la suite de la description, on considère de manière non limitative que le nombre M de sorties est inférieur au nombre N d'antennes élémentaires A₁-A_{N}, afin de réduire le nombre de faisceaux analogiques qui doivent être numérisés. Rien n'exclut cependant, suivant d'autres exemples, de considérer un nombre M égal ou supérieur à N.

Un tel réseau 120 analogique de formation de faisceaux est considéré comme connu de l'homme de l'art, et comporte notamment plusieurs atténuateurs variables et plusieurs déphaseurs variables (non représentés sur les figures), permettant de former M combinaisons différentes des N signaux élémentaires, de sorte à former les M faisceaux analogiques.

Dans l'exemple illustré par la figure 2, les M sorties du réseau 120 analogique de formation de faisceaux sont reliées à un dispositif 130 de calcul par des récepteurs R₁-R_{M} respectifs. Les récepteurs R₁-R_{M} comportent des équipements analogiques (non représentés sur les figures), par exemple des oscillateurs locaux, des mélangeurs et des filtres analogiques permettant de translater fréquentiellement, vers des fréquences plus basses, les faisceaux analogiques fournis par le réseau 120 analogique de formation de faisceaux.

Il est avantageux de placer les mélangeurs en aval du réseau 120 analogique de formation de faisceaux par rapport aux antennes élémentaires A₁-A_{N}. En effet, les mélangeurs sont des équipements analogiques sensibles, susceptibles de saturer. Il est donc possible, en plaçant lesdits mélangeurs en sortie du réseau 120 analogique de formation de faisceaux, de mieux contrôler les signaux qui leur sont fournis en entrée que s'ils avaient été placés directement en sortie des antennes élémentaires A₁-A_{N}.

De préférence, et tel qu'illustré par la figure 2, les N entrées du réseau 120 analogique de formation de faisceaux sont reliées aux antennes élémentaires A₁-A_{N} par des amplificateurs faible bruit L₁-L_{N} respectifs. En effet, il est connu que les amplificateurs faible bruit doivent être placés de préférence au plus près des antennes élémentaires A₁-A_{N} pour améliorer le rapport signal sur bruit des signaux élémentaires. En outre, le réseau 120 analogique de formation de faisceaux introduit différentes pertes, notamment des pertes d'insertion et des pertes par couplage (pour obtenir M voies), de sorte qu'il est préférable que ledit réseau 120 analogique de formation de faisceaux opère sur des signaux élémentaires préalablement amplifiés.

Le dispositif 130 de calcul comporte par exemple des moyens de conversion analogique/numérique des M faisceaux analogiques en sortie des récepteurs R₁-R_{M}. Le dispositif 130 de calcul comporte par exemple également un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes d'un procédé 50 de suppression de signal parasite après. Dans une variante, le dispositif 130 de calcul comporte un ou des circuits logiques programmables, de type FPGA, PLD, etc., et/ou circuits intégrés spécialisés (ASIC) adaptés à mettre en oeuvre tout ou partie desdites étapes du procédé 50 de suppression de signal parasite.

En d'autres termes, le dispositif 130 de calcul comporte un ensemble de moyens configurés de façon logicielle (produit programme d'ordinateur spécifique) et/ou matérielle (FPGA, PLD, ASIC, etc.) pour mettre en oeuvre les différentes étapes du procédé 50 de suppression de signal parasite.

Tel qu'illustré par la figure 2, le dispositif 130 de calcul comporte principalement deux modules fonctionnels :
- un module 131 de traitement numérique,
- un module 132 de commande.

Le module 131 de traitement numérique est configuré pour former un ou plusieurs faisceaux, dits « faisceaux numériques », à partir des signaux numériques obtenus par numérisation des M faisceaux analogiques.

Le module 132 de commande est configuré pour commander les atténuateurs variables et les déphaseurs variables du réseau 120 analogique de formation de faisceaux, afin de contrôler les faisceaux analogiques formés (c'est-à-dire les diagrammes de rayonnement respectifs desdits faisceaux analogiques) en ajustant les atténuations et déphasages respectifs des atténuateurs variables et des déphaseurs variables.

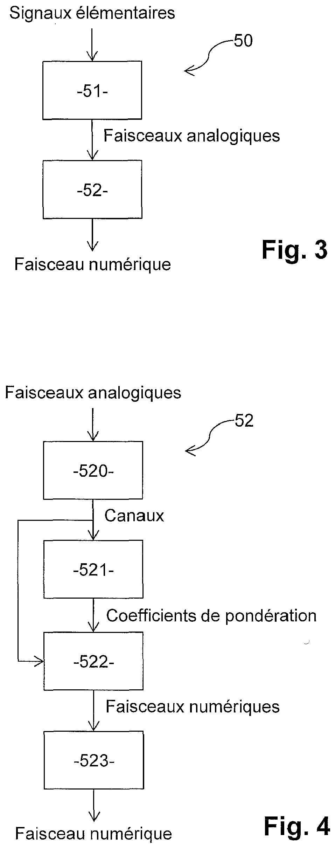

La figure 3 représente les principales étapes d'un procédé 50 de suppression de signal parasite, lesquelles sont :
- une étape 51 de formation analogique de faisceaux analogiques au moyen du réseau 120 analogique de formation de faisceaux commande,
- une étape 52 de formation numérique d'au moins un faisceau numérique par le module 131 de traitement numérique.

Dans un premier temps, on se place de manière non limitative dans le cas où le réseau 110 d'antennes élémentaires A₁-A_{N} reçoit un signal parasite d'un émetteur parasite 40 et un signal utile d'un terminal terrestre 20.

Au cours de l'étape 51 de formation analogique, le réseau 120 analogique de formation de faisceaux est commandé, par le module 132 de commande, de sorte à former :
- au moins un faisceau analogique, dit « faisceau utile », pour lequel le gain du réseau 110 d'antennes élémentaires A₁-A_{N} dans la direction d'arrivée du signal utile est supérieur au gain dans la direction d'arrivée du signal parasite,
- au moins un faisceau analogique, dit « faisceau auxiliaire », dans lequel le gain du réseau 110 d'antennes élémentaires A₁-A_{N} dans la direction d'arrivée du signal parasite est supérieur au gain dans la direction d'arrivée du signal utile.

Ainsi, le faisceau utile vise à favoriser la réception du signal utile en atténuant le signal parasite par rapport au signal utile. Le faisceau auxiliaire vise quant à lui à favoriser la réception du signal parasite en atténuant le signal utile par rapport au signal parasite. Grâce à cette atténuation (du signal parasite dans le faisceau utile et du signal utile dans le faisceau auxiliaire) les risques de saturation des récepteurs R₁-R_{M} sont réduits. Afin d'assurer qu'aucune saturation ne se produit, le module 132 de commande peut avantageusement commander le réseau 120 analogique de formation de faisceaux de sorte à former uniquement des faisceaux analogiques fournissant des signaux de puissances respectives inférieures à une puissance maximale prédéfinie. Ladite puissance maximale prédéfinie est par exemple inférieure à la puissance de saturation des récepteurs R₁-R_{M} et des moyens de conversion analogique/numérique.

L'atténuation du signal parasite par rapport au signal utile (dans le faisceau utile) et du signal utile par rapport au signal parasite (dans le faisceau auxiliaire) peut être plus ou moins importante. Si les conditions le permettent, par exemple si le nombre N d'antennes élémentaires A₁-A_{N} et le nombre M de sorties du réseau 120 analogique de formation de faisceaux est très supérieur au nombre total de signaux reçus, c'est-à-dire très supérieur à deux dans le cas d'un seul signal parasite et d'un seul signal utile, alors il est possible de former :
- un faisceau utile présentant théoriquement un gain multiplicatif sensiblement nul dans la direction d'arrivée du signal parasite, de sorte à maximiser le SNIR du signal utile,
- un faisceau auxiliaire présentant théoriquement un gain multiplicatif sensiblement nul dans la direction d'arrivée du signal utile, de sorte à maximiser le SNIR du signal parasite.

Pour former le faisceau utile et le faisceau auxiliaire, l'étape 51 de formation analogique comporte une estimation de la direction d'arrivée du signal parasite sur le réseau 110 d'antennes élémentaires A₁-A_{N}. L'estimation de la direction d'arrivée du signal parasite (ou du nombre de signaux parasites et de leurs directions d'arrivée respectives dans le cas de plusieurs signaux parasites) peut mettre en oeuvre toute méthode connue de l'homme de l'art, et sort du cadre de l'invention. Par exemple, si la position à la surface de la Terre de l'émetteur parasite 40 est connue, on peut en déduire la direction d'arrivée du signal parasite sur le réseau 110 d'antennes élémentaires A₁-A_{N} en fonction en outre de la position et de l'attitude du satellite 10. Il est également possible, suivant un autre exemple non limitatif, de former un faisceau analogique qui balaie la surface de la Terre afin de déterminer la direction permettant de maximiser la puissance du signal parasite reçu.

En général, le ou les signaux utiles sont émis à partir d'une zone de couverture prédéfinie. Il n'est donc pas forcément nécessaire d'estimer le nombre de signaux utiles et leurs directions d'arrivée respectives. En effet, le faisceau auxiliaire peut être optimisé pour la réception du signal parasite tout en atténuant globalement les signaux utiles reçus de ladite zone de couverture. De même, le faisceau utile peut être formé pour desservir de manière globale cette zone de couverture, sans avoir à se soucier du nombre de signaux utiles et de leurs directions d'arrivée respectives. Rien n'exclut cependant, suivant d'autres exemples, d'estimer également la direction d'arrivée du signal utile (ou le nombre de signaux utiles et leurs directions d'arrivée respectives dans le cas de plusieurs signaux utiles), par exemple pour former un faisceau utile optimisé pour la réception d'un signal utile en particulier (et non pour desservir de manière globale une zone de couverture).

De manière générale, le nombre et les directions d'arrivée des différents signaux peuvent être estimés au niveau du satellite 10 (par exemple par le module 131 de traitement numérique), et/ou au niveau d'une station sol 30 puis transmis audit satellite 10.

De même, la détermination de signaux de commande du réseau 120 analogique de formation de faisceaux permettant d'obtenir un faisceau analogique dans lequel le signal utile est atténué par rapport au signal parasite et un faisceau analogique dans lequel ledit signal parasite est atténué par rapport audit signal utile, peut mettre en oeuvre toute méthode connue de l'homme de l'art. Les signaux de commande du réseau 120 analogique de formation de faisceaux peuvent être déterminés au niveau du satellite 10 (par exemple par le module 131 de traitement numérique qui les transmet au module 132 de commande), et/ou au niveau d'une station sol 30 du système satellitaire puis transmis au module 132 de commande dudit satellite 10.

C'est au cours de l'étape 52 de formation numérique qu'est réellement réalisée la suppression du signal parasite, afin de bénéficier des performances des techniques numériques de formation de faisceaux, qui sont meilleures que celles offertes par les réseaux analogiques de formation de faisceaux (qui sont limitées notamment par les défauts de calibration des équipements analogiques, et par les précisions et résolutions limitées des atténuateurs variables et des déphaseurs variables).

Ainsi, le faisceau numérique calculé par le module 131 de traitement numérique vise à supprimer le signal parasite pour ne conserver que le signal utile. Par « supprimer » le signal parasite, on entend former un faisceau numérique présentant, dans la direction d'arrivée dudit signal parasite, une atténuation d'au moins 20 décibels par rapport au gain maximal du diagramme de rayonnement dudit faisceau numérique. Le module 131 de traitement numérique détermine à cet effet des coefficients de pondération complexes adaptés, qui sont utilisés pour combiner les faisceaux analogiques numérisés.

Le calcul de coefficients de pondération peut mettre en oeuvre toute méthode connue de l'homme de l'art. Les principales méthodes connues effectuent généralement une analyse statistique des signaux considérés, ici les faisceaux analogiques numérisés. Par exemple, il est possible d'estimer la matrice de covariance desdits faisceaux analogiques numérisés, et de déterminer les coefficients de pondération en fonction de la matrice inverse de ladite matrice de covariance. Cependant, d'autres méthodes mathématiques existent pour déterminer des coefficients de pondération adaptés, qui peuvent également être utilisées dans le cadre de l'invention.

De manière générale, il est avantageux d'estimer les coefficients de pondération à partir des faisceaux analogiques numérisés, en particulier le faisceau auxiliaire et le faisceau utile, plutôt que de les estimer à partir des signaux élémentaires numérisés. En effet, les SNIRs respectifs du signal parasite et du signal utile sont meilleurs dans les faisceaux auxiliaire et utile que dans les signaux élémentaires, de sorte que les coefficients de pondération permettant de supprimer le signal parasite sont estimés avec une plus grande précision. En outre, le nombre de faisceaux analogiques est généralement inférieur au nombre de signaux élémentaires, de sorte que la complexité de calcul, notamment le calcul de l'inverse de la matrice de covariance, est grandement réduite. De plus, les matrices de covariance ainsi obtenues sont bien conditionnés et faciles à inverser. Enfin, on est sûr que le calcul fournit le signal utile, alors que pour de nombreuses techniques purement numériques on ne sait pas nécessairement distinguer un signal utile d'un signal parasite (il faut alors faire appel à d'autres moyens).

Dans le cas où le réseau 110 d'antennes élémentaires A₁-A_{N} reçoit plusieurs signaux parasites et/ou plusieurs signaux utiles, plusieurs options sont possibles pour l'étape 51 de formation analogique.

Par exemple, il est possible de former un faisceau utile pour chaque signal utile et un faisceau auxiliaire pour chaque signal parasite, si les conditions le permettent (le nombre N d'antennes élémentaires et le nombre M de sorties du réseau 120 analogique de formation de faisceaux est supérieur au nombre total de signaux reçus (utiles et parasites). Le cas échéant, on forme de préférence :
- pour chaque signal utile, un faisceau utile dans lequel le gain dans la direction d'arrivée du signal utile considéré est supérieur à chacun des gains dans les directions d'arrivée respectives des différents signaux parasites,
- pour chaque signal parasite, un faisceau auxiliaire dans lequel le gain dans la direction d'arrivée du signal parasite considéré est supérieur à chacun des gains dans les directions d'arrivée respectives des différents signaux utiles.

Il est également possible, notamment lorsque les conditions ne permettent pas de former un faisceau analogique par signal parasite ou utile reçu, de former un faisceau utile couvrant plusieurs signaux utiles, par exemple desservant une zone de couverture prédéfinie, dans lequel tout ou partie des signaux parasites sont atténués par rapport aux signaux utiles considérés.

De manière plus générale, il n'est pas nécessaire de fixer a priori le nombre de faisceaux analogiques dédiés aux signaux utiles et le nombre de faisceaux analogiques dédiés aux signaux parasites. Le réseau 120 analogique de formation de faisceaux comportant M sorties, il est possible de former M faisceaux analogiques comportant n'importe quelle combinaison de faisceau(x) utile(s) (au moins un) et de faisceau(x) auxiliaire(s) (au moins un).

Dans le cas où le réseau 110 d'antennes élémentaires A₁-A_{N} reçoit plusieurs signaux parasites et/ou plusieurs signaux utiles, alors il est possible, au cours de l'étape 52 de formation numérique, de former plusieurs faisceaux numériques, par exemple un faisceau numérique pour chaque signal utile. Il est également possible de former plusieurs faisceaux numériques dans le cas où plusieurs zones de couverture distinctes doivent être desservies, par exemple un faisceau numérique par zone de couverture desservie.

La figure 4 représente schématiquement un mode préféré de mise en oeuvre de l'étape 52 de formation numérique, dans le cas où les signaux utiles sont organisés en différents canaux multiplexés en fréquences. Par exemple, les différents canaux occupent des sous-bandes fréquentielles adjacentes à l'intérieur d'une bande fréquentielle, dite « bande de multiplexage BM ».

Tel qu'illustré par la figure 4, l'étape 52 de formation numérique comporte avantageusement, dans un tel cas, des étapes de :
- 520 démultiplexage des canaux à partir des signaux numériques obtenus par numérisation des faisceaux analogiques,
- 521 détermination de coefficients de pondération pour chaque canal,
- 522 formation, pour chaque canal, d'un faisceau numérique au moyen des coefficients de pondération déterminés.

En effet, de meilleures performances en termes de réjection des signaux parasites peuvent être obtenues en se plaçant au niveau canal, c'est-à-dire au niveau de chaque sous-bande fréquentielle, plutôt qu'en traitant de manière globale la bande de multiplexage BM.

Notamment, le ou les signaux parasites peuvent ne perturber que certains canaux. Dans un tel cas, chaque faisceau numérique calculé pour un canal perturbé présente préférentiellement une atténuation importante dans la direction d'arrivée de chaque signal parasite dans le canal considéré. Par contre, pour un canal non perturbé, c'est-à-dire un canal dans lequel il n'y a pas de signal parasite, le faisceau numérique peut être optimisé pour la réception des signaux utiles. Pour un canal non perturbé, le faisceau numérique peut par exemple correspondre au faisceau utile numérisé à l'intérieur de ce canal, ou peut être calculé de sorte à optimiser un autre critère que celui de la réjection spatiale des signaux parasites.

L'étape 520 de démultiplexage vise donc à séparer les différents canaux de la bande de multiplexage BM, afin de pouvoir former un faisceau numérique pour chaque canal de ladite bande de multiplexage BM.

La séparation des différents canaux est de préférence effectuée dans le domaine fréquentiel, en calculant, par exemple au moyen d'une transformée de Fourier, un spectre fréquentiel de chaque faisceau analogique numérisé sur la bande de multiplexage BM. Rien n'exclut cependant d'effectuer la séparation des différents canaux dans le domaine temporel, par exemple au moyen de filtres temporels passe-bande associés respectivement aux différents canaux.

Dans des modes particuliers de mise en oeuvre, et tel qu'illustré par la figure 4, l'étape 52 de formation numérique comporte une étape 523 de multiplexage des faisceaux numériques respectifs des différents canaux, afin d'obtenir un signal représentatif des différents signaux utiles sur toute la bande de multiplexage BM. Dans le cas où les faisceaux numériques sont calculés dans le domaine fréquentiel, l'étape 520 de multiplexage comporte de préférence la combinaison dans le domaine fréquentiel des spectres fréquentiels respectifs desdits faisceaux numériques, et le calcul d'une représentation temporelle du résultat de ladite combinaison, par exemple par transformée de Fourier inverse.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant que l'étape 51 de formation analogique et l'étape 52 de formation numérique étaient exécutées principalement par la charge utile 100 du satellite 10. Rien n'exclut cependant, suivant d'autres exemples, d'avoir certaines fonctions mises en oeuvre au sol, par exemple par une même station sol 30.

Par exemple, le module 131 de traitement numérique, qui calcule les faisceaux numériques à partir des faisceaux analogiques numérisés peut être intégré dans une station sol 30. Le cas échéant, le module 131 de traitement numérique reçoit lesdits faisceaux analogiques, numérisés ou non, de la charge utile 100 du satellite 10.

Le réseau 120 analogique de formation de faisceaux est lui nécessairement à bord du satellite 10, de même que le module 132 de commande qui contrôle les atténuateurs variables et les déphaseurs variables à partir des signaux de commande reçus. Par contre, et tel qu'indiqué précédemment, les signaux de commande peuvent être déterminés par la charge utile 100 du satellite 10, ou être déterminés au sol et transmis à ladite charge utile 100 pour y être utilisés par le module 132 de commande. Il peut également être envisagé de supporter les deux modes (signaux de commande pouvant être déterminés à bord ou au sol), afin de pouvoir choisir d'effectuer ces opérations à bord ou au sol, et ainsi améliorer la flexibilité de la solution et offrir un surcroît de résilience par rapport à des systèmes satellitaires qui sont obligés de fonctionner dans l'un ou l'autre de ces modes.

La description ci-avant illustre clairement que par ses différentes caractéristiques et leurs avantages, la présente invention atteint les objectifs qu'elle s'était fixés. En particulier, l'invention repose, in fine, sur des techniques numériques de formation de faisceaux pour supprimer les signaux parasites, qui sont plus performantes que les techniques analogiques. Par contre, des faisceaux analogiques sont formés pour limiter les risques de saturation des équipements analogiques et pour améliorer le SNIR à la fois des signaux utiles et des signaux parasites. Ainsi, les performances des techniques numériques de formation de faisceaux, appliquées sur ces faisceaux analogiques, sont encore améliorées d'un point de vue précision et robustesse.

L'invention décrite ci-dessus est applicable à des signaux utiles et parasites qui peuvent avoir été émis par des terminaux situés soit au sol, soit en altitude au-dessus de la surface du sol (avion, drone, ballon, satellite). En outre, les terminaux peuvent être fixes ou mobiles (voiture, avion, drone, ballon, train, bateau, et utilisés pendant un déplacement ou entre deux déplacements, etc.). Il est en outre possible de s'adapter à des émetteurs parasites 40 en déplacement en mettant à jour de manière récurrente les signaux de commande (pour la formation des faisceaux analogiques et/ou les coefficients de pondération (pour la formation des faisceaux numériques). L'invention décrite, du fait qu'elle permet de s'auto-adapter à différents signaux parasites, offre une solution robuste face à des scénarios de brouillage très divers : brouilleurs isolés ou multiples (groupés ou dispersés, fixes ou mobiles) et ayant des caractéristiques de brouillage variées (fixe ou variable en fréquence et en temps).

L'invention décrite ci-dessus est utilisable dans n'importe quelle bande de fréquences, on peut citer à titre d'exemples les bandes de fréquences classiquement utilisées par les systèmes de télécommunications par satellite, telles que : C, L, S, X, Ku, Ka, Q/V. En effet, le module 131 de traitement numérique fonctionnant en bande de base, il s'agit d'adapter les chaînes de réception pour changer la bande de fréquences considérée. Il est à noter que plus les bandes de fréquences utilisées sont basses et plus les moyens, nécessaires pour bien discriminer spatialement le signal utile et le signal parasite, sont encombrants.

L'invention décrite ci-dessus est efficace pour protéger des interférences ou des brouillages des systèmes de communication radio par satellite fonctionnant dans différentes bandes de fréquences et effectuant des missions civiles ou militaires ou une combinaison des deux. Les communications à protéger peuvent porter sur n'importe quel type de contenu numérique ou analogique susceptible d'être échangé avec un terminal satellite (échange de documents, conversations téléphoniques, données de fax, données résultat de la consultation de pages Web, du streaming audio ou vidéo, etc.).

L'utilisation de l'invention peut également permettre de :
- de protéger des échanges de données inter-satellite d'interférences ou de brouillages,
- réutiliser tout ou partie du spectre d'un autre système, tout en tolérant des interférences qu'il génère et provenant du sol,
- autoriser localement la réutilisation par un autre système (satellitaire ou non) de tout ou partie du spectre du système satellitaire considéré,
- faciliter la coordination du spectre entre systèmes suffisamment proches pour qu'il y ait un risque d'interférence d'un système sur l'autre.

Comparativement aux techniques connues de l'état de l'art, l'invention proposée permet donc notamment :
- de limiter les risques de saturation des équipements analogiques les plus sensibles,
- de fournir en même temps un haut niveau de performance et de la souplesse dans la réjection d'un ou de plusieurs signaux parasites simultanés par l'utilisation de techniques numériques,
- de fournir une réjection à la fois sélective en fréquences et extrêmement large bande, dans le cas d'un traitement par sous-bande fréquentielle,
- de relâcher les exigences de calibration et d'alignement des équipements analogiques des chaînes de réception : ainsi, ils doivent juste être assez bons pour permettre de réduire la puissance du signal parasite par formation de faisceaux analogiques, la réjection définitive pour protéger l'intégrité du signal utile étant réalisée par traitement numérique,
- de s'intégrer aisément dans une architecture numérique de traitement de signal possédant déjà un démultiplexeur numérique ainsi que des capacités de formation de faisceaux numériques et de multiplexage.

## Revendications

1. Procédé (50) de suppression d'un signal parasite reçu avec un signal utile par un réseau (110) d'antennes élémentaires (A₁-A_{N}) d'une charge utile (100) d'un satellite (10), ledit procédé de suppression comportant une étape (51) de formation analogique de faisceaux, dits «faisceaux analogiques », au moyen d'un réseau (120) analogique de formation de faisceaux et à partir de signaux élémentaires fournis par lesdites antennes élémentaires, et une étape (52) de formation numérique d'un faisceau, dit « faisceau numérique », **caractérisé en ce que** l'étape (51) de formation analogique comporte :
- la formation d'au moins un faisceau analogique, dit « faisceau utile », pour lequel le gain du réseau d'antennes élémentaires dans la direction d'arrivée du signal utile est supérieur au gain dans la direction d'arrivée du signal parasite,
- la formation d'au moins un faisceau analogique, dit « faisceau auxiliaire », dans lequel le gain du réseau d'antennes élémentaires dans la direction d'arrivée du signal parasite est supérieur au gain dans la direction d'arrivée du signal utile,
le faisceau numérique étant obtenu, au cours de l'étape (52) de formation numérique, par combinaison de signaux numériques obtenus par numérisation au moins dudit faisceau auxiliaire et dudit faisceau utile, au moyen de coefficients de pondération déterminés de sorte à supprimer le signal parasite dans ledit faisceau numérique.

2. Procédé (50) selon la revendication 1, dans lequel le réseau analogique de formation de faisceaux est commandé, au cours de l'étape (51) de formation analogique, de sorte à former des faisceaux analogiques de puissances respectives inférieures à une puissance maximale prédéfinie.

3. Procédé (50) selon l'une des revendications précédentes, dans lequel, au moins deux signaux parasites étant reçus par le réseau (120) d'antennes élémentaires, l'étape (51) de formation analogique comporte la formation d'au moins deux faisceaux auxiliaires dans lesquels les gains du réseau (110) d'antennes élémentaires dans les directions d'arrivée respectives desdits au moins deux signaux parasites sont supérieurs au gain dans la direction d'arrivée du signal utile.

4. Procédé (50) selon l'une des revendications précédentes, dans lequel, au moins deux signaux utiles étant reçus par le réseau (120) d'antennes élémentaires, l'étape (51) de formation analogique comporte la formation d'au moins deux faisceaux utiles dans lesquels les gains du réseau (110) d'antennes élémentaires dans les directions d'arrivée respectives desdits au moins deux signaux utiles sont supérieurs au gain dans la direction d'arrivée du signal parasite.

5. Procédé (50) selon l'une des revendications précédentes, dans lequel, les signaux utiles étant organisés en différents canaux multiplexés en fréquences, l'étape (52) de formation numérique comporte des étapes de :
- (520) démultiplexage des canaux à partir des signaux numériques obtenus par numérisation des faisceaux analogiques,
- (521) détermination de coefficients de pondération pour chaque canal,
- (522) formation, pour chaque canal, d'un faisceau numérique au moyen des coefficients de pondération déterminés pour ledit canal.

6. Procédé (50) selon la revendication 5, dans lequel l'étape (520) de démultiplexage comporte un calcul de spectre fréquentiel pour chaque faisceau analogique numérisé par transformée de Fourier.

7. Procédé (50) selon l'une des revendications 5 à 6, dans lequel l'étape (52) de formation numérique comporte une étape (523) de multiplexage des faisceaux numériques respectifs des différents canaux.

8. Procédé (50) selon la revendication 7, dans lequel, les faisceaux numériques étant calculés dans le domaine fréquentiel, l'étape (523) de multiplexage comporte la combinaison dans le domaine fréquentiel des spectres fréquentiels respectifs desdits faisceaux numériques, et le calcul d'une représentation temporelle du résultat de ladite combinaison par transformée de Fourier inverse.

9. Produit programme d'ordinateur **caractérisé en ce qu'**il comporte un ensemble d'instructions de code de programme qui, lorsqu'elles sont exécutées par un processeur, configurent ledit processeur pour mettre en oeuvre un procédé (50) de suppression de signal parasite selon l'une des revendications précédentes.

10. Charge utile (100) de satellite (10) comportant un réseau (110) d'antennes élémentaires (A₁-A_{N}) et un réseau (120) analogique de formation de faisceaux, **caractérisée en ce qu'**elle comporte des moyens configurés pour mettre en oeuvre un procédé (50) de suppression de signal parasite selon l'une des revendications 1 à 8.

11. Système satellitaire comportant un satellite (10) et au moins une station sol (30), ledit satellite comportant une charge utile (100) comportant un réseau (110) d'antennes élémentaires (A₁-A_{N}) et un réseau (120) analogique de formation de faisceaux, **caractérisé en ce qu'**il comporte des moyens configurés pour mettre en oeuvre un procédé (50) de suppression de signal parasite selon l'une des revendications 1 à 8.

## Patentansprüche

1. Verfahren (50) zum Unterdrücken eines Störsignals, das mit einen Nutzsignal durch ein Netzwerk (110) elementarer Antennen (A₁-A_{N}) einer Nutzlast (100) eines Satelliten (10) empfangen wird, wobei das Unterdrückungsverfahren einen Schritt (51) des analogen Bildens von "analoge Strahlen" genannten Strahlen mittels eines analogen Strahlenbildungsnetzwerks (120) und ausgehend von elementaren Signalen umfasst, die von den elementaren Antennen geliefert werden, und einen Schritt (52) des digitalen Bildens eines "digitaler Strahl" genannten Strahls, **dadurch gekennzeichnet, dass** der analoge Bildungsschritt (51) umfasst:
- Bilden von mindestens einem "Nutzstrahl" genannten analogen Strahl, bei dem die Verstärkung des Netzwerks elementarer Antennen in der Ankunftsrichtung des Nutzsignals größer ist als die Verstärkung in der Ankunftsrichtung des Störsignals,
- Bilden von mindestens einem "Hilfsstrahl" genannten analogen Strahl, wobei die Verstärkung des Netzwerks elementarer Antennen in der Ankunftsrichtung des Störsignals größer ist als die Verstärkung in der Ankunftsrichtung des Nutzsignals,
wobei der digitale Strahl im Lauf des digitalen Bildungsschritts (52) durch Kombination von digitalen Signalen, die durch Digitalisierung von mindestens dem Hilfsstrahl und dem Nutzstrahl erhalten werden, mittels Gewichtungskoeffizienten erhalten wird, die derart bestimmt werden, dass das Störsignal im digitalen Strahl unterdrückt wird.

2. Verfahren (50) nach Anspruch 1, wobei das analoge Strahlenbildungsnetzwerk im Lauf des analogen Bildungsschritts (51) derart gesteuert wird, dass analoge Strahlen von jeweiligen Leistungen gebildet werden, die kleiner sind als eine vordefinierte maximale Leistung.

3. Verfahren (50) nach einem der vorstehenden Ansprüche, wobei mindestens zwei Störsignale durch das Netzwerk (120) elementarer Antennen empfangen werden, wobei der analoge Bildungsschritt (51) das Bilden von mindestens zwei Hilfsstrahlen umfasst, wobei die Verstärkungen des Netzwerks (110) elementarer Antennen in den jeweiligen Ankunftsrichtungen der mindestens zwei Störsignale größer sind als die Verstärkung in der Ankunftsrichtung des Nutzsignals.

4. Verfahren (50) nach einem der vorstehenden Ansprüche, wobei mindestens zwei Nutzsignale durch das Netzwerk (120) elementarer Antennen empfangen werden, wobei der analoge Bildungsschritt (51) das Bilden von mindestens zwei Nutzstrahlen umfasst, wobei die Verstärkungen des Netzwerks (110) elementarer Antennen in den jeweiligen Ankunftsrichtungen der mindestens zwei Nutzsignale größer sind als die Verstärkung in der Ankunftsrichtung des Störsignals.

5. Verfahren (50) nach einem der vorstehenden Ansprüche, wobei, wenn die Nutzsignale in verschiedenen frequenzgemultiplexten Kanälen organisiert sind, der digitale Bildungsschritt (52) Schritte umfasst des:
- (520) Demultiplexens der Kanäle ausgehend von den digitalen Signalen, die durch Digitalisieren der analogen Strahlen erhalten wurden,
- (521) Bestimmens von Gewichtungskoeffizienten für jeden Kanal,
- (522) Bildens, für jeden Kanal, eines digitalen Strahls mittels der Gewichtungskoeffizienten, die für den Kanal bestimmt wurden.

6. Verfahren (50) nach Anspruch 5, wobei der Schritt (520) des Demultiplexens eine Frequenzspektrumsberechnung für jeden digitalisierten analogen Strahl durch Fourier-Transformation umfasst.

7. Verfahren (50) nach einem der Ansprüche 5 bis 6, wobei der digitale Bildungsschritt (52) einen Schritt (523) des Demultiplexens der jeweiligen digitalen Strahlen der verschiedenen Kanäle umfasst.

8. Verfahren (50) nach Anspruch 7, wobei, wenn die digitalen Strahlen im Frequenzbereich berechnet werden, der Schritt (523) des Multiplexens das Kombinieren der jeweiligen Frequenzspektren der digitalen Strahlen im Frequenzbereich und das Berechnen einer zeitlichen Darstellung des Ergebnisses der Kombination durch inverse Fourier-Transformation umfasst.

9. Computerprogrammprodukt, **dadurch gekennzeichnet, dass** es einen Satz von Programmcodeanweisungen umfasst, die, wenn sie von einem Prozessor ausgeführt werden, den Prozessor dafür konfigurieren, ein Störsignal-Unterdrückungsverfahren (50) nach einem der vorstehenden Ansprüche umzusetzen.

10. Nutzlast (100) eines Satelliten (10), die ein Netzwerk (110) elementarer Antennen (A₁-A_{N}) und ein analoges Strahlenbildungsnetzwerk (120) umfasst, **dadurch gekennzeichnet, dass** sie Mittel umfasst, die dafür konfiguriert sind, ein Störsignal-Unterdrückungsverfahren (50) nach einem der Ansprüche 1 bis 8 umzusetzen.

11. Satellitensystem, das einen Satelliten (10) und mindestens eine Bodenstation (30) umfasst, wobei der Satellit eine Nutzlast (100) umfasst, die ein Netzwerk (110) elementarer Antennen (A₁-A_{N}) und ein analoges Strahlenbildungsnetzwerk (120) umfasst, **dadurch gekennzeichnet, dass** es Mittel umfasst, die dafür konfiguriert sind, ein Störsignal-Unterdrückungsverfahren (50) nach einem der Ansprüche 1 bis 8 umzusetzen.

## Claims

1. A method (50) of suppressing a parasite signal received with a useful signal by an array (110) of elementary antennas (A₁-A_{N}) of a payload (100) of a satellite (10), said suppression method including a step (51) of analog formation of beams, termed "analog beams", by means of an analog beam forming network (120) and from elementary signals supplied by said elementary antennas, and a step (52) of digital formation of a beam, termed a "digital beam", **characterized in that** the analog formation step (51) includes:
- the formation of at least one analog beam, termed a "useful beam", for which the gain of the array of elementary antennas in the direction of arrival of the useful signal is higher than the gain in the direction of arrival of the parasite signal,
- the formation of at least one analog beam, termed an "auxiliary beam", in which the gain of the array of elementary antennas in the direction of arrival of the parasite signal is higher than the gain in the direction of arrival of the useful signal,
the digital beam being obtained, during the digital formation step (52), by combining digital signals obtained by digitization of at least said auxiliary beam and said useful beam using weighting coefficients determined in order to suppress the parasite signal in said digital beam.

2. The method (50) as claimed in claim 1, in which the analog beam forming network is controlled, during the analog formation step (51), so as to form analog beams with respective powers less than a predefined maximum power.

3. The method (50) as claimed in either one of the preceding claims, in which, at least two parasite signals being received by the array (120) of elementary antennas, the analog formation step (51) includes the formation of at least two auxiliary beams in which the gains of the array (110) of elementary antennas in the respective directions of arrival of said at least two parasite signals are higher than the gain in the direction of arrival of the useful signal.

4. The method (50) as claimed in any one of the preceding claims, in which, at least two useful signals being received by the array (120) of elementary antennas, the analog formation step (51) includes the formation of at least two useful beams in which the gains of the array (110) of elementary antennas in the respective directions of arrival of said at least two useful signals are higher than the gain in the direction of arrival of the parasite signal.

5. The method (50) as claimed in any one of the preceding claims, in which, the useful signals being organized into different frequency-multiplexed channels, the digital formation step (52) includes steps of:
- demultiplexing (520) the channels on the basis of the digital signals obtained by digitization of the analog beams,
- determination (521) of the weighting coefficients for each channel,
- formation (522) for each channel of a digital beam by means of the weighting coefficients determined for said channel.

6. The method (50) as claimed in claim 5, in which the demultiplexing step (520) includes a frequency spectrum calculation for each digitized analog beam by means of a Fourier transform.

7. The method (50) as claimed in either one of claims 5 or 6, in which the digital formation step (52) includes a step (523) of multiplexing the respective digital beams of the various channels.

8. The method (50) as claimed in claim 7, in which, the digital beams being calculated in the frequency domain, the multiplexing step (523) includes the combination in the frequency domain of the respective frequency spectra of said digital beams and the calculation of a representation in the time domain of the result of said combination using an inverse Fourier transform.

9. A computer program product **characterized in that** it includes a set of program code instructions which, when they are executed by a processor, configure said processor to implement a parasite signal suppression method (50) as claimed in any one of the preceding claims.

10. A payload (100) of a satellite (10) including an array (110) of elementary antennas (A₁-A_{N}) and an analog beam forming network (120), **characterized in that** it includes means configured to implement a parasite signal suppression method (50) as claimed in any one of claims 1 to 8.

11. A satellite system including a satellite (10) and at least one ground station (30), said satellite including a payload (100) including an array (110) of elementary antennas (A₁-A_{N}) and an analog beam forming network (120), **characterized in that** it includes means configured to implement a parasite signal suppression method (50) as claimed in any one of claims 1 to 8.
